# EUROPÄISCHE PATENTSCHRIFT

(11) **EP 2 461 732 B1**
(45) Veröffentlichungstag und Bekanntmachung des Hinweises auf die Patenterteilung: **11.09.2019**
(21) Anmeldenummer: 10737548.7
(22) Anmeldetag: 22.07.2010
(51) Int. Cl.: A47L 15/42, F16K 1/42, F16K 25/00, A47L 15/00

(54) **WASSERFÜHRENDES HAUSHALTSGERÄT**
WATER-BEARING DOMESTIC APPLIANCE
APPAREIL MÉNAGER À CIRCULATION D'EAU

(30) Priorität: 06.08.2009 DE 102009028277
(43) Veröffentlichungstag der Anmeldung: 13.06.2012
(73) Patentinhaber: BSH Hausgeräte GmbH, 81739 München (DE)
(72) Erfinder: HEISELE, Bernd, 89567 Sontheim (DE); LUGERT, Michael, 89343 Jettingen-Scheppach (DE); WIRTH, Karl, 89415 Lauingen (DE)
(86) Internationale Anmeldenummer: PCT/EP2010/060624
(87) Internationale Veröffentlichungsnummer: WO 2011/015464

(56) Entgegenhaltungen:
- WO-A1-2006/086976
- DE-A1- 2 250 905
- DE-A1-102007 041 305

## Beschreibung

Die Erfindung betrifft ein wasserführendes Haushaltsgerät, insbesondere eine Geschirrspülmaschine, mit einer Flüssigkeitsleitung, in der ein Ventil angeordnet ist, das ein verstellbares Ventilelement aufweist, das zum Öffnen und Schließen des Ventils mit einem Ventilsitz zusammenwirkt.

Während eines Spülgangs durchlaufen Geschirrspülmaschinen Spülprogramme, die aus einer Anzahl von Teilprogrammschritten bestehen, wie z.B. Vorspülen, Reinigen, Zwischenspülen, Klarspülen und Trocknen. Zur Verteilung von Flüssigkeit während eines Spülprogrammdurchlaufs sind im Flüssigkeitskreislauf einer Geschirrspülmaschine Ventile vorgesehen, die einen Flüssigkeitsweg öffnen oder schließen. Jedoch können Schmutzpartikel in der Flüssigkeit ein Ventil blockieren.

Aus der DE 10 2007 041 305 A1 ist eine Geschirrspülmaschine bekannt, die eine Flüssigkeitsleitung aufweist, in der ein Ventil angeordnet ist, das ein verstellbares Ventilelement aufweist, das zum Öffnen und Schließen des Ventils mit einem Ventilsitz zusammenwirkt. Aus der DE 22 50 905 A1 ist ein Ventil zum Absperren flüssiger Druckmedien bekannt, das Verunreinigungen an Schneidkanten abschneiden kann.
Die Aufgabe der Erfindung besteht darin, ein Haushaltsgerät, insbesondere Geschirrspülmaschine, bereitzustellen, bei dem ein zuverlässiger Ventilbetrieb gewährleistet ist.

Die Erfindung geht aus von einem wasserführendes Haushaltsgerät, insbesondere einer Geschirrspülmaschine, mit einer Flüssigkeitsleitung, in der ein Ventil angeordnet ist, das ein verstellbares Ventilelement aufweist, das zum Öffnen und Schließen des Ventils mit einem Ventilsitz zusammenwirkt.

Erfindungsgemäß ist der Ventilsitz oder das Ventilelement wenigstens abschnittsweise eine im Wesentlichen scharfkantige Abrisskante aufweisend ausgebildet ist, mit der bei einem Schließvorgang des Ventils Schmutzpartikel zwischen dem Ventilsitz und dem Ventilelement durchtrennbar sind. Schmutzpartikel, die bei geöffnetem Ventil zwischen dem Ventilelement und dem Ventilsitz hängenbleiben, können somit beim Schließvorgang sozusagen abgeschnitten werden. Die Dichtfunktion zwischen dem Ventilelement und dem Ventilsitz ist somit nicht beeinträchtigt, da sich im Bereich des Strömungsspalts zwischen Ventilelement und Ventilsitz keine Schmutzpartikel dauerhaft festsetzen können. Das Ventil ist daher vor allem im Schmutz- und Brauchwasserbereich eines wasserführenden Haushaltsgerätes, insbesondere einer Geschirrspülmaschine, einsetzbar.

Um ein Durchtrennen von hängengebliebenen Schmutzpartikeln zu gewährleisten, kann die Abrisskante im Querschnitt in Richtung auf das verstellbare Ventilelement spitzwinklig zulaufen. Eine Schneidfunktion kann insbesondere dann gewährleistet sein, wenn die Abrisskante in einem Winkel zwischen 30° und 50° zuläuft. Bevorzugt ist ein spitzer Winkel von 45°. In diesem Fall ist einerseits die Abrisskante noch ausreichend scharfkantig und andererseits ausreichend formstabil und auch im Kunststoffspritzgussverfahren noch einfach zu fertigen.

Darüber hinaus ist eine betriebsbedingte Beschädigung der Dichtfläche des Ventilelements zu vermeiden, wie sie bei einer zu scharfkantigen Gestaltung des Ventilsitzes eintreten kann. Es hat sich daher als vorteilhaft erwiesen, wenn die Abrisskante an ihrer Spitze mit einer Abrundung versehen ist, insbesondere mit einem Radius im Bereich von 0,3 mm.

Der als Abrisskante gebildete Ventilsitz kann z. B. rotationssymmetrisch ausgebildet sein und eine Mündungsöffnung der Flüssigkeitsleitung begrenzen. Die rotationssymmetrische Außenkontur der Abrisskante kann dabei kegelstumpfförmig ausgebildet sein, um die oben genannte scharfkantige Geometrie des Ventilsitzes zu erreichen.

Das Ventil kann einen flüssigkeitsdurchströmten Ventilraum aufweisen, der mittels eines Ventilgehäuses eingegrenzt ist. Die Abrisskante kann hierbei fertigungstechnisch einfach materialeinheitlich und einstückig zusammen mit dem Ventilgehäuse als Kunststoffteil hergestellt sein, bei dem die Abrisskante in den Ventilraum einragt.

Im geschlossenen Zustand des Ventils ist das verstellbare Ventilelement erfindungsgemäß flüssigkeitsdicht in Anlage gegen die Abrisskante gedrückt. Im geöffneten Zustand des Ventils ist dagegen das Ventilelement über einen Ventilhub vom Ventilsitz weg verstellt, wodurch ein Strömungsspalt zur Mündungsöffnung freigelegt ist, der eine Flüssigkeitsströmung durch das Ventil ermöglicht.

Wie oben erwähnt, kann mittels des als Abrisskante gebildeten Ventilsitzes die Dichtfläche zwischen Ventilsitz und Ventilelement im Wesentlichen frei von Schmutzpartikeln gehalten werden, wodurch eine einwandfreie Funktion des Ventils gewährleistet ist. Hierbei hat es sich als günstig erwiesen, wenn die Dichtfläche nicht in einer horizontalen Ebene ausgerichtet ist, sondern eine Dichtebene vielmehr gegenüber einer solchen horizontalen Ebene geneigt ist, und insbesondere vertikal ausgerichtet ist. Schmutzpartikel im Bereich des Strömungsspaltes zwischen Ventilsitz und Ventilelement können sich somit nicht dauerhaft in diesem Bereich absetzen, sondern werden durch Schwerkraftwirkung einfach von dem Strömungsspalt abgeführt.

Um beim Schließvorgang des Ventils ein Abschneiden von sich im Strömungsspalt festgesetzten Schmutzpartikeln zu unterstützen, kann das Ventilelement mittels eines Stelltriebes mit hoher Stellkraft gegen die Abrisskante gedrückt werden. Als Stelltriebe kommen elektromagnetische Aktuatoren oder Thermoaktuatoren in Frage. In Hinblick auf eine hohe Stellkraft ist der Einsatz eines Thermoaktuators bevorzugt, bei dem unter Bestromung ein dehnfähiges Material, etwa Wachs, ausgedehnt wird, wodurch besonders große Stellkräfte erreicht werden können.

Für eine einwandfreie Abdichtung kann das Ventilelement an seiner, dem Ventilsitz zugewandten Seite aus einem elastischen Material, z. B. Silikonmaterial gebildet sein. Das elastische Material kann dabei derart weich ausgelegt sein, dass im geschlossenen Zustand des Ventil die Abrisskante mit einer vorgegebenen Eindringtiefe das Ventilelement eingedrückt werden kann, um ein Abtrennen von möglicherweise festgesetzten Schmutzpartikeln zu gewährleisten. Bevorzugt kann eine solche Eindringtiefe im Bereich von 0 bis 1 mm liegen, um eine aufgabengemäße Wirkung des Ventilsitzes zu erhalten.

Ein Abführen von bereits innerhalb des Ventils befindlichen Schmutzpartikeln vom Dichtbereich zwischen Ventilsitz und Ventilelement kann dadurch unterstützt werden, dass die Flüssigkeitsleitung ausgehend von ihrer Mündungsöffnung in das Ventil mit einem vorgegebenen Gefälle nach unten abfällt, etwa nach Art eines Siphons, an dessen Siphonboden sich die Schmutzpartikel aufgrund des Leitungsgefälles sammeln können.

Das Abführen von Schmutzpartikeln im Strömungsbereich zwischen Ventilelement und der Abrisskante kann außerdem dadurch unterstützt werden, dass vertikal unterhalb der Abrisskante ein Freiraum bereitgestellt wird, in dem sich die Schmutzpartikel sammeln können. Bevorzugt ist es, wenn der Freiraum unmittelbar über einen Durchlass in die weiterführende Flüssigkeitsleitung einmündet, so dass die Schmutzpartikel aufgrund der Schwerkraft aus dem Ventilraum durch den Durchlass nach außen verlagert werden können.

Bevorzugt kann die Erfindung insbesondere in einer Geschirrspülmaschine eingesetzt werden, die einen zusätzlichen Speicherbehälter aufweist. In dem Speicherbehälter kann Spülflüssigkeit zwischengespeichert werden, die nach Ausführung eines Teilprogrammschrittes eines Spülgangs nicht mehr benötigt wird. Die nicht mehr benötigte Spülflüssigkeit wird vom Spülraum mittels einer Umwälzpumpe sowie bei geöffnetem Speicherbehälterventil in den Speicherbehälter gepumpt. Anschließend wird das Speicherbehälterventil geschlossen und bspw. bis zum nächsten Spülgang zwischengespeichert und beim nächsten Spülgang zum Vorspülen des Spülgutes eingesetzt werden. Um das Befüllen und Entleeren des Speicherbehälters zu steuern, ist ein Speicherbehälterventil vorgesehen, mit dem eine Regeleinrichtung der Geschirrspülmaschine den Flüssigkeitsweg zum Speicherbehälter öffnen oder schließen kann.

Das Speicherbehälterventil ist strömungstechnisch zwischen dem Spülbehälter und dem Speicherbehälter, das heißt im Schmutz- oder Brauchwasserbereich der Geschirrspülmaschine, angeordnet. Hier besteht die Problematik, dass bei geöffnetem Ventil Schmutzpartikel innerhalb des Speicherbehälterventils hängenbleiben und sich dort festsetzen können. In diesem Fall kann es zu einer Störung oder Undichtheit am Ventil und somit zu einer Fehlfunktion des Speicherbehälters kommen.

Zur Rückführung der zwischengespeicherten Spülflüssigkeit in den Flüssigkeitskreislauf der Geschirrspülmaschine wird das Speicherbehälterventil geöffnet, wodurch die Spülflüssigkeit aus dem Speicherbehälter strömen kann. Die Spülflüssigkeit kann dabei unter Schwerkraftwirkung, das heißt mit geringer Geschwindigkeit, vom Speicherbehälter in den Spülraum der Geschirrspülmaschine einströmen.

Das Ablassen der zwischengespeicherten Spülflüssigkeit aus dem Speicherbehälter ist im Hinblick auf eine Störung des Speicherbehälterventils kritisch. In diesem Fall besteht nämlich die Gefahr, dass Schmutzpartikel aus dem Speicherbehälter mitgerissen werden und das Speicherbehälterventil zusetzen können.

Demgegenüber wird beim Befüllen des Speicherbehälters Spülflüssigkeit mittels der Umwälzpumpe in den Speicherbehälter gepumpt. Auf diese Weise wird der Siphonboden regelmäßig mit großer Flüssigkeitsgeschwindigkeit durchspült, wodurch ein Verstopfen des Siphons vermieden werden kann.

In einer weiteren, bevorzugten Ausführungsform ist vorgesehen, dass die Abrisskante vollumfänglich oder teilweise um eine Mündungsöffnung der Flüssigkeitsleitung umlaufend ausgebildet ist. Dabei kann die Mündungsöffnung der Flüssigkeitsleitung einen kreisförmigen oder einen anderen, z.B. ovalen Querschnitt aufweisen.

Es ist ferner vorzugsweise vorgesehen, dass die Abrisskante bei vollumfänglichem Umlauf kreisförmig oder bei teilweisem Umlauf bogenförmig ausgebildet ist. Es sind jedoch auch andere Ausbildungen der Abrisskante möglich, z.B. mit abrupten Übergängen in Form von Knickabschnitten, wie z.B. vier-, fünf- oder sechseckförmige Ausbildungen der Abrisskante. Ferner sind andere Form wie z.B. Sternformen möglich.

Schließlich ist vorzugsweise vorgesehen, dass die teilweise um die Mündungsöffnung umlaufende Abrisskante im Bereich schwerkraft- und/oder strömungsbedingter Anlagerung von Schmutzpartikeln angeordnet ist. So kann die Abrisskante z.B. bei einer im Bereich der Mündungsöffnung im Wesentlichen waagerecht verlaufenden Flüssigkeitsleitung im unteren Bereich der Mündungsöffnung, z.B. im Fall ein Mündungsöffnung mit kreisförmigen Querschnitt im unteren Halbkreis angeordnet sein, da sich hier erwartungsgemäß Schmutzpartikel ansammeln werden.

Nachfolgend ist ein Ausführungsbeispiel der Erfindung anhand der beigefügten Figuren beschrieben.

Es zeigen:
- Fig. 1: in einem schematischen Blockdiagramm eine Geschirrspülmaschine mit einem Speicherbehälter;
- Fig. 2: in einer vergrößerten Seitenschnittdarstellung das mit dem Speicherbehälter verbundene Speicherbehälterventil beim Ablassen von zwischengespeicherter Spülflüssigkeit;
- Fig. 3: in einer Ansicht entsprechend der Fig. 2 den Speicherbehälter mit geschlossenem Speicherbehälterventil;
- Fig. 4 und 5: jeweils vergrößerte Schnittansichten des Speicherbehälterventils in verschiedenen Betriebszuständen; und
- Fig. 6: eine Detailansicht der Dichtzone zwischen dem Ventilsitz und dem verstellbaren Ventilelement des Speicherbehälterventils.

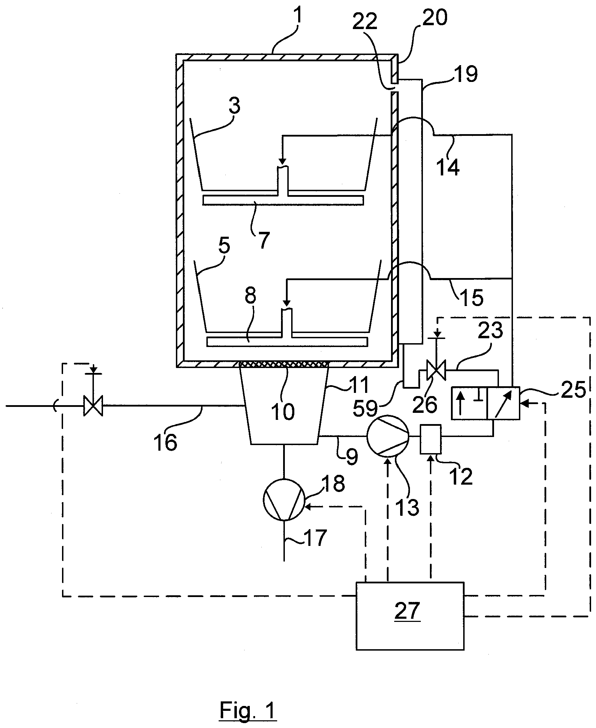

In der Fig. 1 ist schematisch eine Geschirrspülmaschine mit einem, einen Spülraum begrenzenden Spülbehälter 1 gezeigt. Im Spülraum des Spülbehälters 1 kann ein nicht dargestelltes, zu reinigendes Spülgut in Geschirrkörben 3, 5 angeordnet werden. Im gezeigten Spülbehälter 1 sind beispielhaft zwei, in unterschiedlichen Sprühebenen vorgesehene Sprüharme 7, 8 angeordnet, über die das Spülgut mit Spülflüssigkeit beaufschlagt wird. Im Spülbehälterboden ist ein Pumpentopf 11 mit einer nur grob angedeuteten Siebanordnung 10 vorgesehen. Vom Pumpentopf 11 ist eine Umwälzleitung 9 mit darin angeordneter Umwälzpumpe 13 weggeführt. Die Umwälzleitung 9 ist über Zuleitungen 14, 15 strömungstechnisch mit den Sprüharmen 7, 8 verbunden. Der Umwälzpumpe 13 nachgeschaltet ist ein, als Wasserheizung bezeichnetes Heizelement 12.

Der Pumpentopf 11 ist außerdem über Anschlussstutzen mit einer, mit dem Wasserversorgungsnetz gekoppelten Frischwasser-Zuleitung 16 sowie mit einer Ablaufleitung 17 in Verbindung, in der eine Laugenpumpe 18 zum Abpumpen von Spülflüssigkeit aus dem Spülbehälter 1 angeordnet ist. Der Spülbehälter 1 weist an seiner, in der Fig. 1 rechten Seite als Speicherbehälter 19 einen sogenannten Speicherbehälter auf, der nach Art eines Wärmetauschers thermisch gekoppelt in Anlage mit einer Seitenwand 20 des Spülbehälters 1 ist.

In dem Speicherbehälter 19 kann Spülflüssigkeit zwischengespeichert werden, die nach Ausführung eines Teilprogrammschrittes eines Spülganges nicht mehr benötigt wird. Der Speicherbehälter 19 weist in seinem oberen Bereich eine Be- und Entlüftungsöffnung 22 auf, die eine strömungstechnische in Verbindung mit dem Spülraum herstellt.

Während der Durchführung eines Spülgangs umfasst der Flüssigkeitskreislauf unter anderem der Pumpentopf 11 mit zugeordneter Siebanordnung 10, die Umwälzleitung 9, die Zuleitungen 14, 15 sowie die beiden Sprüharme 7, 8.

Stromab des Heizelementes 12 ist in der Umwälzleitung 9 eine als Drei-Wege-Schaltventil 25 dargestellte Wasserweiche vorgesehen, an der eine Verbindungsleitung 23 abzweigt, die zum Speicherbehälter 19 führt.

In der in der Fig. 1 gezeigten Schaltstellung des Drei-Wege-Schaltventils 25 ist die Verbindung zum Speicherbehälter 19 unterbrochen und die Umwälzleitung 9 mit den Zuleitungen 14, 15 verbunden. In dieser Schaltstellung des Drei-Wege-Schaltventils 25 kann daher die Spülflüssigkeit zur Durchführung des Spülgangs in der Geschirrspülmaschine zirkuliert werden.

Das Drei-Wege-Schaltventil 25 verbindet demgegenüber in einer in der Fig. 1 nicht gezeigten Schaltstellung die Umwälzleitung 9 mit der, zum Speicherbehälter 19 führenden Verbindungsleitung 23 und unterbricht den Strömungsweg zu den Zuleitungen 14, 15. In dieser Schaltstellung kann zur Reinigung des Speicherbehälters 19 die Spülflüssigkeit mit hoher Strömungsgeschwindigkeit in den Speicherbehälter 19 gepumpt werden und diesen füllen, bis die Spülflüssigkeit über die Be- und Entlüftungsöffnung 22 in den Spülbehälter 1 eintritt und entlang der Spülbehälterwand 20 vorbei an den Geschirrkörben 3, 5 wieder in den Pumpentopf 11 mit zugeordneter Siebanordnung 10 rückgeführt wird. Auf diese Weise können Schmutzpartikel, Fettrückstände, etc. aus dem Speicherbehälter 19 geführt werden.

Damit das Befüllen oder Entleeren des Speicherbehälters 19 mittels der Regeleinrichtung 27 gesteuert werden kann, ist ein Speicherbehälterventil 26 vorgesehen. Das Ventil 26 ist in der zum Speicherbehälter 19 führenden Verbindungsleitung 23 angeordnet und zum Beispiel während der oben genannten Speicherbehälter-Reinigung in seiner OffenStellung angeordnet.

Beispielhaft kann der Spülgang mit einem Vorspülschritt gestartet werden, bei dem eine im Speicherbehälter 19 zwischengespeicherte Klarspülwassermenge vom vorangegangenen Spülgang in den Pumpentopfbereich des Spülbehälters 1 eingelassen wird. Hierzu wird das Speicherbehälterventil 26 geöffnet und das Drei-Wege-Ventil 25 entsprechend verstellt. Die zwischengespeicherte Klarspülmenge kann daher alleine durch Schwerkraftwirkung in den Pumpentopfbereich des Spülbehälters 1 einströmen.

Anschließend wird das Drei-Wege-Schaltventil 25 zurück in seine in der Fig. 1 gezeigte Schaltstellung geschaltet sowie die Umwälzpumpe 13 gestartet, wodurch das vom Speicherbehälter 19 abgelassene Klarspülwasser zirkulieren kann. Nach Ausführung des Vorspülschrittes wird die Spülflüssigkeit mittels der Laugenpumpe 18 abgepumpt und anschließend Frischwasser für einen folgenden Reinigungsschritt in den Pumpentopfbereich zugeführt.

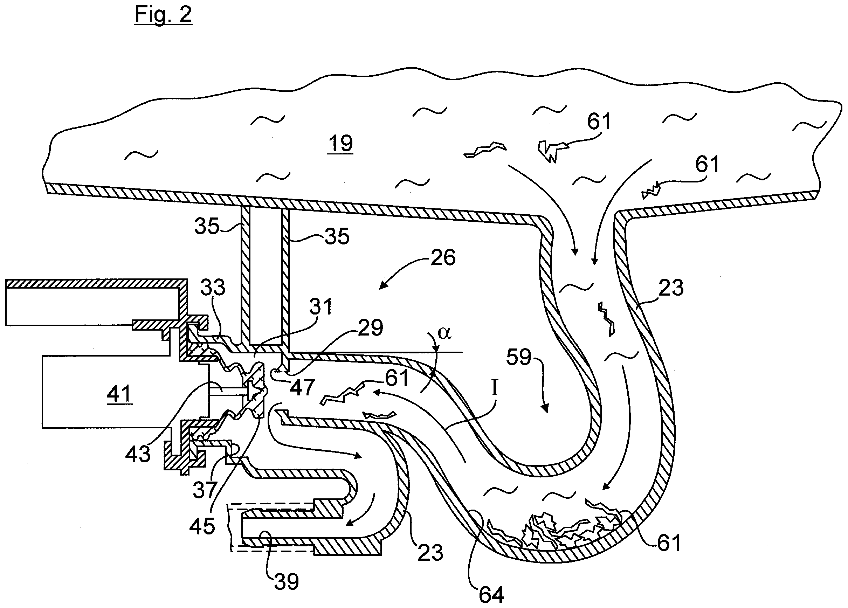

Wie aus der Fig. 2 hervorgeht, ist die vom Speicherbehälter 19 kommende Verbindungsleitung 23 über eine Mündungsöffnung 29 mit einem Ventilraum 31 des Speicherbehälterventils 26 in Verbindung. Der Ventilraum 31 ist radial außenseitig mit einem Stutzen 33 begrenzt. Der Stutzen 33 ist über zwei Versteifungsrippen 35 mit der Unterseite des Speicherbehälters 19 in Verbindung. Der Ventilraum 31 mündet außerdem an seiner Bodenseite über einen Durchlass 37 wiederum in die Verbindungsleitung 23, die über einen Anschlussstutzen 39 an der Wasserweiche 25 anschließbar ist. Die Verbindungsleitung 23 ist dabei ausgehend vom bodenseitigen Durchlass 37 des Ventils 26 über eine U-förmige Biegung vertikal nach unten weitergeführt.

In den, den Ventilraum 31 begrenzenden Stutzen 33 ist ein Thermoaktuator 41 des Speicherbehälterventils 26 eingesetzt, an dessen Ventilstößel 43 ein über einen Ventilhub verstellbarer Ventilteller 45 befestigt ist.

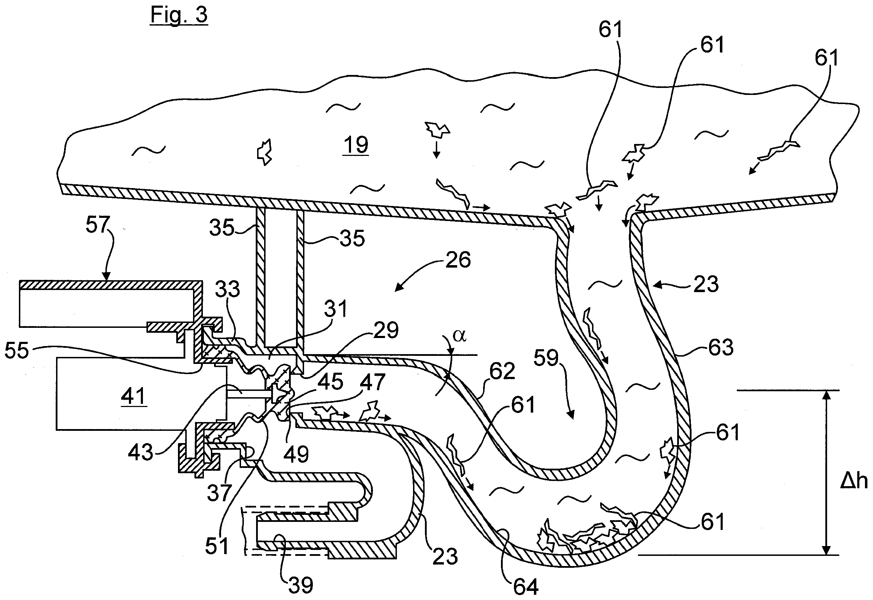

In der Fig. 2 ist der verstellbare Ventilteller 45 in seiner Offenstellung gezeigt, während er in der Fig. 3 in seiner Schließstellung ist, in der die Dichtstellen 47 des Ventiltellers 45 und des Ventilsitzes 49 in Dichtanlage gedrückt sind. Der Ventilsitz 49 ist umfangsseitig um die Mündungsöffnung 29 gezogen. Dabei sind die Dichtstellen bzw. Dichtflächen 47 des Ventilsitzes 49 und des Ventiltellers 45 gemäß der Fig. 3 in einer vertikalen Ebene ausgerichtet.

Der Ventilteller 47 ist gemäß den Fig. 2 bis 5 integraler Bestandteil eines Membranelementes 51, das als ein im Wesentlichen rotation symmetrisches Silikonbauteil gebildet ist. Das rotationssymmetrische Membranelement 51 ist mit seinem offenen ringförmigen Ende in einem Ringspalt zwischen dem Anschlussstutzen 33 und einem innen liegenden Rohrstutzen 55 eines Gehäuseteils 57 eingesetzt. Das Stelltrieb-Einsatzteil 41 ist daher nicht unmittelbar in den Anschlussstutzen 33 eingesetzt, sondern unter Zwischenlage des Gehäuseteils 57.

Wie aus der Fig. 3 weiter hervorgeht, weist die Flüssigkeitsleitung 23 zwischen dem Speicherbehälterventil 26 und dem Speicherbehälter 19 ein Siphon 59 auf, das die in der Fig. 3 angedeuteten Schmutzpartikel 61 vom Ventil 26 zurückhält. Dass Siphon 59 ist durch zwei im Wesentlichen vertikal ausgerichteten Leitungsabschnitten 62 und 63 gebildet, die zueinander gegenläufig verlaufen. Die beiden Leitungsabschnitte 62, 63 sind dabei unmittelbar jeweils an der Mündungsöffnung 29 des Ventils 26 sowie an einer Durchlassöffnung des Speicherbehälters 19 verbunden. Der Leitungsabschnitt 62 des Siphons 59 fällt dabei unmittelbar ausgehend vom Ventil 26 mit einem ansteigenden Neigungswinkel α nach unten und geht am Siphonboden 64 über in den zum Speicherbehälter 19 führenden Leitungsabschnitt 63.

Der Leitungsabschnitt 62 des Siphons 59 ist somit ausgehend von der Mündungsöffnung 29 stets über den Neigungswinkel α nach unten geneigt, wodurch die Schmutzpartikel 61 unter Schwerkraftwirkung weg vom Ventil 26 zum Siphonboden 64 wandern können. Der Siphonboden 64 ist dabei um eine Höhendifferenz Δh unterhalb des Speicherbehälterventils 26 angeordnet.

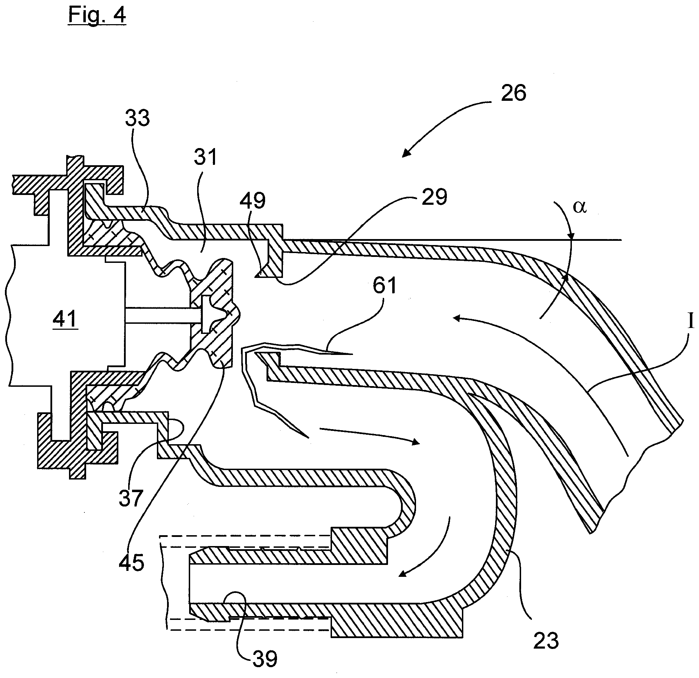

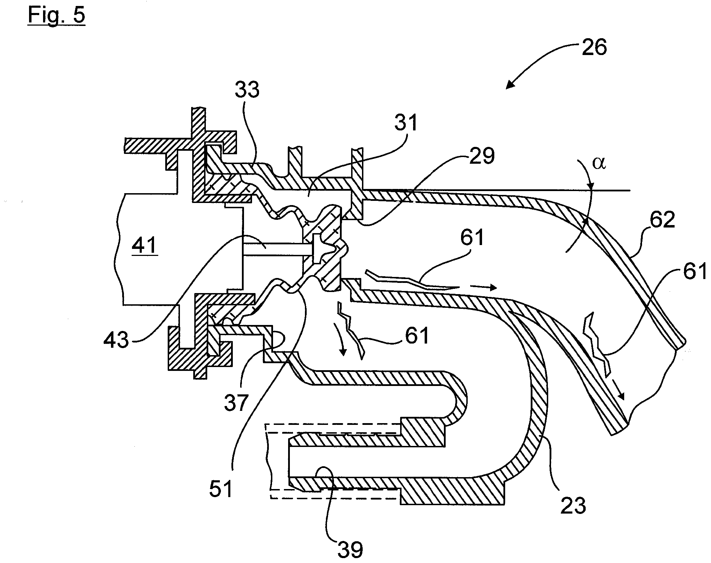

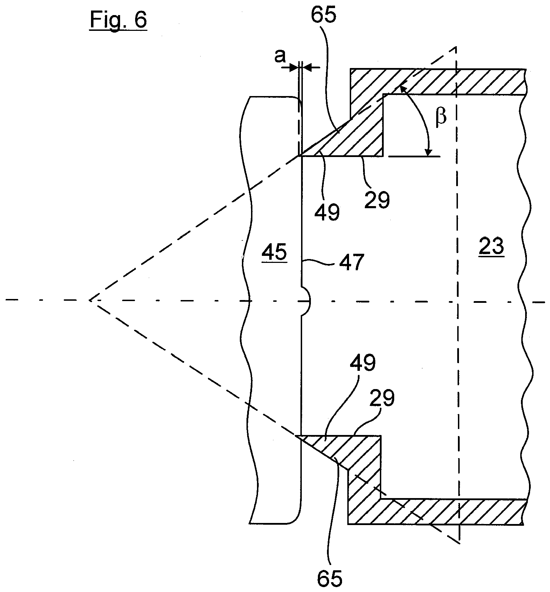

Wie insbesondere aus der Fig. 4 und 6 hervorgeht, ist der Ventilsitz 49 in Richtung auf den Ventilteller 45 scharfkantig ausgebildet. Dadurch können Schmutzpartikel zwischen dem Ventilsitz 49 und dem Ventilteller 45 beim Schließvorgang des Ventiltellers 45 durchtrennt werden, wie es anhand der Fig. 4 und 5 gezeigt ist. Demzufolge ist gemäß der Fig. 4 ein langgezogener Schmutzpartikel 61 beim Entleeren des Speicherbehälters 19 am Ventilsitz 49 hängengeblieben. Beim Schließen des Ventils 26 wird der Schmutzpartikel 61 gemäß der Fig. 5 in zwei Teile durchtrennt, von denen ein abgetrennter Teil durch den Durchlass 37 unter Schwerkraftwirkung in die weiterführende Flüssigkeitsleitung 23 verlagert wird. Das andere Teil kann ebenfalls unter Schwerkraftwirkung zum Siphonboden 64 verlagert werden.

In der schematischen Darstellung der Fig. 6 ist die Geometrie des als Abrisskante gebildeten Ventilsitzes 49 gezeigt. Demzufolge ist die Außenkontur 65 der Abrisskante 49 kegelstumpfförmig ausgebildet und läuft die Abrisskante in einem Winkel β von etwa 45° spitzwinklig auf das Ventilelement 45 zu. Die Spitze der Abrisskante 49 ist leicht abgerundet.

Das Ventilelement 45 ist im vorliegenden Ausführungsbeispiel demgegenüber im Bereich seiner Dichtfläche 47 mit einem ausreichend weichen Silikonmaterial gebildet, wodurch in der Schließstellung des Ventils die Abrisskante 49 bis zu einer Eindringtiefe a im Bereich von 1 bis 2 mm in das Silikonmaterial des Ventiltellers 45 eingedrückt werden kann. Die Abrisskante 49 ist somit nahezu in Linienkontakt mit der Dichtfläche 47 des Ventiltellers 45. Mit gestrichelter Linie ist in der Fig. 6 ein Kegel angedeutet, in dessen Mantelfläche die Außenkontur 65 des Ventilsitzes 49 liegt.

Nachfolgend werden anhand der Fig. 2 und 3 unterschiedliche Betriebszustände der Geschirrspülmaschine beschrieben. So ist in der Fig. 3 das Speicherbehälterventil 26 in seiner geschlossenen Stellung gezeigt, wodurch die vorher in den Speicherbehälter 19 gepumpte Spülflüssigkeit zwischengespeichert werden kann. Die im Speicherbehälter 19 sowie in der Verbindungsleitung 23 vorhandenen Schmutzpartikel 61 lagern sich daher im Laufe der Zeit am Boden des Speicherbehälters 19 und/oder am Siphonboden 64 ab. Das Speicherbehälterventil 26 bleibt dabei im Bereich der Dichtflächen 47 weitgehend frei von Schmutzpartikeln 61.

In der Fig. 2 ist das Speicherbehälterventil 26 in seiner geöffneten Stellung gezeigt, in der der Ventilteller 45 um einen Ventilhub nach links verstellt ist. Auf diese Weise ist ein Strömungsspalt zwischen dem Ventilteller 45 und dem Ventilsitz 49 freigegeben. Die im Speicherbehälter 19 zwischengespeicherte Spülflüssigkeit wird somit unter Schwerkraftwirkung aus dem Speicherbehälter 19 abgelassen und gelangt zurück in den Flüssigkeitskreislauf der Geschirrspülmaschine. Die zwischengespeicherte Spülflüssigkeit durchströmt somit in der Strömungsrichtung I das Speicherbehälterventil 26. Der Höhenunterschied Δh zwischen dem Speicherbehälterventil 26 und dem Siphonboden 64 ist dabei so ausgelegt, dass die am Siphonboden 64 aufgefangenen Schmutzpartikel 61 durch die Strömung I größtenteils nicht bis zum Speicherbehälterventil 26 mitgerissen werden können.

### BEZUGSZEICHENLISTE

- 1: Spülbehälter
- 3, 5: Geschirrkörbe
- 7, 8: Sprüharme
- 9: Umwälzleitung
- 10: Siebanordnung
- 11: Pumpentopf
- 12: Heizelement
- 13: Umwälzpumpe
- 14, 15: Zuleitungen
- 16: Frischwasser-Zuleitung
- 17: Ablaufleitung
- 18: Laugenpumpe
- 19: Speicherbehälter
- 20: Spülbehälter-Seitenwand
- 22: Be- und Entlüftungsöffnung
- 23: Verbindungsleitung
- 25: Drei-Wege-Schaltventil
- 26: Speicherbehälterventil
- 27: Regeleinrichtung
- 29: Mündungsöffnung
- 31: Ventilraum
- 33: Anschlussstutzen
- 37: Durchlass
- 39: Stutzen
- 41: Thermoaktuator
- 43: Ventilstößel
- 45: Ventilelement
- 47: Dichtstellen
- 49: Ventilsitz, Abrisskante
- 51: Membranelement
- 55: Rohrstutzen
- 57: Gehäuseteil
- 59: Siphon
- 61: Schmutzpartikel
- 62, 63: Leitungsabschnitte
- 64: Siphonboden
- 65: Außenkontur der Abrisskante
- I: Strömungsrichtung
- Δh: Höhenunterschied
- α: Neigungswinkel
- β: spitzer Winkel der Abrisskante
- a: Eindringtiefe

## Patentansprüche

1. Wasserführendes Haushaltsgerät, insbesondere Geschirrspülmaschine, mit einer Flüssigkeitsleitung (23), in der ein Ventil (26) angeordnet ist, das ein verstellbares Ventilelement (45) aufweist, das zum Öffnen und Schließen des Ventils (26) mit einem Ventilsitz (49) zusammenwirkt, wobei der Ventilsitz (49) wenigstens abschnittsweise eine im Wesentlichen scharfkantige Abrisskante aufweisend ausgebildet ist, mit der bei einem Schließvorgang des Ventils (26) Schmutzpartikel (61) zwischen dem Ventilsitz (49) und dem Ventilelement (45) durchtrennbar sind, und wobei im geöffneten Zustand des Ventils (26) das Ventilelement (45) über einen Ventilhub vom Ventilsitz (49) weg verstellt ist, wodurch ein Strömungsspalt zu einer Mündungsöffnung freigelegt ist, der eine Flüssigkeitsströmung durch das Ventil (26) ermöglicht, **dadurch gekennzeichnet, dass** im geschlossenen Zustand des Ventils (26) das verstellbare Ventilelement (45) flüssigkeitsdicht in Anlage gegen die Abrisskante gedrückt ist.

2. Wasserführendes Haushaltsgerät nach Anspruch 1, **dadurch gekennzeichnet, dass** die Abrisskante spitzwinklig ausgebildet ist, insbesondere mit einem Winkel (β) zwischen 30° und 50°, besonders bevorzugt mit einem Winkel von 45°.

3. Wasserführendes Haushaltsgerät nach Anspruch 1 oder 2, **dadurch gekennzeichnet, dass** die Abrisskante an ihrer Spitze mit einer Abrundung versehen ist, insbesondere mit einem Radius im Bereich von 0,3 mm.

4. Wasserführendes Haushaltsgerät nach einem der vorhergehenden Ansprüche, **dadurch gekennzeichnet, dass** die Außenkontur (65) der Abrisskante kegelstumpfförmig ausgebildet ist.

5. Wasserführendes Haushaltsgerät nach einem der vorhergehenden Ansprüche, **dadurch gekennzeichnet, dass** die Abrisskante in einen flüssigkeitsdurchströmten Ventilraum (31) des Ventils (26) einragt.

6. Wasserführendes Haushaltsgerät nach einem der vorhergehenden Ansprüche, **dadurch gekennzeichnet, dass** die Dichtflächen (47) zwischen der Abrisskante (49) und dem Ventilelement (45) in einer Dichtebene liegen, die gegenüber einer horizontalen Ebene geneigt ist, und insbesondere in vertikaler Richtung ausgerichtet ist.

7. Wasserführendes Haushaltsgerät nach einem der vorhergehenden Ansprüche, **dadurch gekennzeichnet, dass** das Ventilelement (45) mittels eines Stelltriebes (41) mit hoher Stellkraft gegen die Abrisskante drückbar ist, insbesondere mittels eines Thermoaktuators.

8. Wasserführendes Haushaltsgerät nach einem der vorhergehenden Ansprüche, **dadurch gekennzeichnet, dass** das Ventilelement (45) zumindest im Bereich seiner Dichtfläche (47) aus einem elastischen Material gebildet ist.

9. Wasserführendes Haushaltsgerät nach einem der vorhergehenden Ansprüche, **dadurch gekennzeichnet, dass** im geschlossenen Zustand des Ventils (26) die Abrisskante (49) mit einer Eindringtiefe (a) in einem Bereich von 0 bis 1 mm in das Ventilelement (45) eingedrückt ist.

10. Wasserführendes Haushaltsgerät nach einem der vorhergehenden Ansprüche, **dadurch gekennzeichnet, dass** die Flüssigkeitsleitung (23) eine Mündungsöffnung (29) aufweist, die mit einem Neigungswinkel (α) nach unten abfällt.

11. Wasserführendes Haushaltsgerät nach einem der Ansprüche 5 bis 10, **dadurch gekennzeichnet, dass** der Ventilraum (31) des Ventils (26) vertikal unterhalb der Abrisskante über einen bodenseitigen Durchlass (37) aufweist, der mit der Flüssigkeitsleitung (23) verbunden ist.

12. Wasserführendes Haushaltsgerät nach einem der vorhergehenden Ansprüche, **dadurch gekennzeichnet, dass** das wasserführende Haushaltsgerät einen Speicherbehälter (19) aufweist, in dem Spülflüssigkeit zwischenspeicherbar ist, und dass die Flüssigkeitsleitung (23) einen Spülbehälter (1) des wasserführenden Haushaltsgeräts mit dem Speicherbehälter (19) verbindet.

13. Wasserführendes Haushaltsgerät nach Anspruch 12, **dadurch gekennzeichnet, dass** in einer ersten Strömungsrichtung (I) die im Speicherbehälter (19) zwischengespeicherte Spülflüssigkeit, insbesondere unter Schwerkraftwirkung, vom Speicherbehälter (19) in einen Spülraum des Haushaltsgeräts einströmt, wobei in einer entgegengesetzten zweiten Strömungsrichtung (II) die Spülflüssigkeit mittels einer Umwälzpumpe (13) in den Speicherbehälter (19) förderbar ist.

14. Wasserführendes Haushaltsgerät nach einem der vorhergehenden Ansprüche, **dadurch gekennzeichnet, dass** die Abrisskante vollumfänglich oder teilweise um eine Mündungsöffnung (29) der Flüssigkeitsleitung (23) umlaufend ausgebildet ist, wobei die Abrisskante kreisförmig oder bogenförmig ausgebildet ist.

15. Wasserführendes Haushaltsgerät nach Anspruch 14, **dadurch gekennzeichnet, dass** die teilweise um die Mündungsöffnung umlaufende Abrisskante im Bereich schwerkraft- und/oder strömungsbedingter Anlagerung von Schmutzpartikeln (61) angeordnet ist.

## Claims

1. Water-conducting household appliance, in particular a dishwasher, having a liquid line (23) in which a valve (26) is arranged, which has a displaceable valve element (45) which cooperates with a valve seat (49) for opening and closing the valve (26), wherein the valve seat (49) is at least partially formed having a substantially sharp-edged tear-off edge with which during a closing operation of the valve (26) dirt particles (61) can be severed between the valve seat (49) and the valve element (45), and wherein in the open state of the valve (26) the valve element (45) is displaced via a valve lift away from the valve seat (49), as a result of which a flow gap to a discharge opening is exposed, which permits a flow of liquid through the valve (26), **characterised in that** in the closed state of the valve (26) the displaceable valve element (45) is pressed in a liquid-tight manner lying against the tear-off edge.

2. Water-conducting household appliance according to claim 1, **characterised in that** the tear-off edge is formed at an acute angle, in particular at an angle (β) between 30° and 50°, particularly preferably at an angle of 45°.

3. Water-conducting household appliance according to claim 1 or 2, **characterised in that** the tear-off edge is provided at its tip with a rounding, in particular with a radius in the range of 0.3 mm.

4. Water-conducting household appliance according to one of the preceding claims, **characterised in that** the outer contour (65) of the tear-off edge is frustoconical.

5. Water-conducting household appliance according to one of the preceding claims, **characterised in that** the tear-off edge protrudes into a valve chamber (31) of the valve (26), through which valve chamber (31) liquid flows.

6. Water-conducting household appliance according to one of the preceding claims, **characterised in that** the sealing surfaces (47) lie between the tear-off edge (49) and the valve element (45) in a sealing plane which is inclined relative to a horizontal plane, and is aligned in particular in the vertical direction.

7. Water-conducting household appliance according to one of the preceding claims, **characterised in that** the valve element (45) can be pressed by means of an actuating drive (41) with high actuating force against the tear-off edge, in particular by means of a thermoactuator.

8. Water-conducting household appliance according to one of the preceding claims, **characterised in that** the valve element (45) is formed at least in the region of its sealing surface (47) from an elastic material.

9. Water-conducting household appliance according to one of the preceding claims, **characterised in that** in the closed state of the valve (26) the tear-off edge (49) is pressed into the valve element (45) with a penetration depth (a) in a range from 0 to 1 mm.

10. Water-conducting household appliance according to one of the preceding claims, **characterised in that** the liquid line (23) has a discharge opening (29) which drops downwards at an angle of inclination (α).

11. Water-conducting household appliance according to one of claims 5 to 10, **characterised in that** the valve chamber (31) of the valve (26) vertically below the tear-off edge has a bottom-side passage (37) which is connected to the liquid line (23).

12. Water-conducting household appliance according to one of the preceding claims, **characterised in that** the water-conducting household appliance has a storage container (19), in which rinsing liquid can be temporarily stored, and that the liquid line (23) connects a dishwasher cavity (1) of the water-conducting household appliance to the storage container (19).

13. Water-conducting household appliance according to claim 12, **characterised in that** in a first flow direction (I) the rinsing liquid temporarily stored in the storage container (19) flows, in particular under gravity, from the storage container (19) into a washing compartment of the household appliance, wherein in an opposite second flow direction (II) the rinsing liquid can be conveyed into the storage container (19) by means of a circulating pump (13).

14. Water-conducting household appliance according to one of the preceding claims, **characterised in that** the tear-off edge is formed circumferentially in full or in part around a discharge opening (29) of the liquid line (23), wherein the tear-off edge is circular or arcuate.

15. Water-conducting household appliance according to claim 14, **characterised in that** the tear-off edge running partially circumferentially around the discharge opening is arranged in the region of gravity-related and/or flow-related accretion of dirt particles (61).

## Revendications

1. Appareil ménager à circulation d'eau, notamment lave-vaisselle, comprenant une conduite de liquide (23) dans laquelle est disposée une vanne (26) qui présente un élément de vanne (45) réglable, lequel, pour ouvrir et fermer la vanne (26), coopère avec un siège de vanne (49), le siège de vanne (49) étant réalisé en présentant au moins en partie une arête de détachement essentiellement coupante, à l'aide de laquelle, lors d'une opération de fermeture de la vanne (26), des particules de saleté (61) entre le siège de vanne (49) et l'élément de vanne (45) peuvent être coupées, et l'élément de vanne (45), à l'état ouvert de la vanne (26), étant réglé en s'éloignant du siège de vanne (49) par l'intermédiaire d'une course de vanne, sur quoi une fente d'écoulement vers une ouverture d'embouchure est libérée, laquelle permet un écoulement de liquide à travers la vanne (26), **caractérisé en ce qu'**à l'état fermé de la vanne (26), l'élément de vanne (45) réglable est pressé de manière étanche au liquide en venant s'appliquer contre l'arête de détachement.

2. Appareil ménager à circulation d'eau selon la revendication 1, **caractérisé en ce que** l'arête de détachement est réalisée en angle aigu, notamment avec un angle (β) compris entre 30° et 50°, de manière particulièrement préférée avec un angle de 45°.

3. Appareil ménager à circulation d'eau selon la revendication 1 ou 2, **caractérisé en ce que** l'arête de détachement est munie sur sa pointe d'un arrondissement, notamment ayant un rayon situé dans la plage de 0,3 mm.

4. Appareil ménager à circulation d'eau selon l'une quelconque des revendications précédentes, **caractérisé en ce que** le contour extérieur (65) de l'arête de détachement est réalisé en forme de cône tronqué.

5. Appareil ménager à circulation d'eau selon l'une quelconque des revendications précédentes, **caractérisé en ce que** l'arête de détachement dépasse dans un espace de vanne (31) de la vanne (26), traversé par le liquide.

6. Appareil ménager à circulation d'eau selon l'une quelconque des revendications précédentes, **caractérisé en ce que** les surfaces d'étanchéité (47) entre l'arête de détachement (49) et l'élément de vanne (45) sont situées dans un plan d'étanchéité qui est incliné par rapport à un plan horizontal et est notamment orienté en direction verticale.

7. Appareil ménager à circulation d'eau selon l'une quelconque des revendications précédentes, **caractérisé en ce que** l'élément de vanne (45) peut être pressé contre l'arête de détachement avec une force de réglage élevée au moyen d'un mécanisme de réglage (41), notamment au moyen d'un thermo-actionneur.

8. Appareil ménager à circulation d'eau selon l'une quelconque des revendications précédentes, **caractérisé en ce que** l'élément de vanne (45) est formé dans une matière élastique au moins dans la partie de sa surface d'étanchéité (47).

9. Appareil ménager à circulation d'eau selon l'une quelconque des revendications précédentes, **caractérisé en ce qu'**à l'état fermé de la vanne (26), l'arête de détachement (49) est enfoncée dans l'élément de vanne (45) avec une profondeur de pénétration (a) située dans une plage de 0 à 1 mm.

10. Appareil ménager à circulation d'eau selon l'une quelconque des revendications précédentes, **caractérisé en ce que** la conduite de liquide (23) présente une ouverture d'embouchure (29) qui est en pente vers le bas avec un angle d'inclinaison (α).

11. Appareil ménager à circulation d'eau selon l'une quelconque des revendications 5 à 10, **caractérisé en ce que** l'espace de vanne (31) de la vanne (26) présente un passage (37) côté fond verticalement en dessous de l'arête de détachement, lequel est relié à la conduite de liquide (23).

12. Appareil ménager à circulation d'eau selon l'une quelconque des revendications précédentes, **caractérisé en ce que** l'appareil ménager à circulation d'eau présente un réservoir de stockage (19) dans lequel le liquide de lavage peut être stocké de manière intermédiaire, et **en ce que** la conduite de liquide (23) relie un réservoir de lavage (1) de l'appareil ménager à circulation d'eau au réservoir de stockage (19).

13. Appareil ménager à circulation d'eau selon la revendication 12, **caractérisé en ce que** le liquide de lavage stocké de manière intermédiaire dans le réservoir de stockage (19) s'écoule dans une première direction d'écoulement (I), notamment sous l'effet de la pesanteur, du réservoir de stockage (19) dans un espace de lavage de l'appareil ménager, le liquide de lavage, dans une deuxième direction d'écoulement (II) inverse, pouvant être transporté dans le réservoir de stockage (19) au moyen d'une pompe de circulation (13).

14. Appareil ménager à circulation d'eau selon l'une quelconque des revendications précédentes, **caractérisé en ce que** l'arête de détachement est réalisée en entourant entièrement ou en partie une ouverture d'embouchure (29) de la conduite de liquide (23), l'arête de détachement étant réalisée de manière circulaire ou arquée.

15. Appareil ménager à circulation d'eau selon la revendication 14, **caractérisé en ce que** l'arête de détachement entourant en partie l'ouverture d'embouchure est disposée dans la zone de dépôt de particules de saleté (61), dû à la pesanteur et/ou au courant.
